# FASCICULE DE BREVET EUROPEEN

(11) **EP 0 536 033 B1**
(45) Date de publication et mention de la délivrance du brevet: **02.04.1997**
(21) Numéro de dépôt: 92402651.1
(22) Date de dépôt: 28.09.1992
(51) Int. Cl.: H04B 7/195

(54) **Procédé de basculement du trafic dans un système de communications par satellites en orbite basse à destination de terminaux et système de communications mettant en oeuvre un tel procédé**
Verfahren zur Umschaltung des nach Endgeräten gerichteten Verkehrs in einer Satellitenübertragungsanordnung mit Umlaufbahnen niedriger Höhe und Kommunikationssystem für dieses Verfahren
Method of traffic switching in a low orbit satellite communication system with terminals as destination and communication system using this method

(30) Priorité: 01.10.1991 FR 9112048
(43) Date de publication de la demande: 07.04.1993
(73) Titulaire: ALCATEL ESPACE, F-92407 Courbevoie Cédex (FR)
(72) Inventeur: Rouffet, Denis, F-92100 Boulogne Billancourt (FR); Berthault, Frédéric, F-75015 Paris (FR); Mazzella, Michel, F-78100 St Germain en Laye (FR); Tanguy, Yannick, F-75015 Paris (FR)
(74) Mandataire: Pothet, Jean Rémy Emile Ludovic

(56) Documents cités:
- EP-A- 0 365 885
- PROCEDINGS OF THE IEEE, vol. 75, no. 1, Janvier 1987, NEW-YORK,US; pages 74 - 81 R.BINDER ET AL 'Crosslink Architectures for a multiple satellite system'
- Rapport du CCIR: US IWP 8/14-52; 1er Août 1990

## Description

L'invention concerne un procédé de basculement de trafic dans un système de communications par satellites en orbite basse à destination de terminaux mobiles ou non, émetteurs-récepteurs ou récepteurs uniquement, la connexion d'un terminal à un réseau terrestre de communications étant accomplie au moyen d'une station de connexion.

Les communications par satellites avec des terminaux mobiles étudiées jusqu'à présent utilisaient deux types d'orbites : les orbites des satellites géostationnaires ou des orbites elliptiques fortement inclinées ayant toutes deux la propriété d'être situées, en moyenne, au-dessus de zones dans l'espace à forte concentration de particules, appelées "ceintures de Van Allen". Depuis peu des orbites plus basses ont été considérées. Leur altitude se situe entre 800 et 2000 km. Une des caractéristiques des systèmes de communications par satellites qui utilisent de telles orbites est la possibilité de communiquer avec un nombre important de terminaux mobiles, par exemple du type portatifs. La différence entre les orbites d'altitude supérieure aux "ceintures de Van Allen" et celles d'altitude inférieure réside dans une atténuation d'espace d'autant plus faible que le satellite est proche de la terre.

Un rapport du CCIR (document numéro US IWP 8/14-52; 1er Août 1990) intitulé "Technical characteristics of a personal communication mobile satellite system" décrit un système de communications par satellites à orbite basse avec des antennes multifaisceaux. La constellation de satellites ainsi réalisée comprend 77 satellites pour assurer une couverture globale de la terre. Elle comprend 7 plans de 11 satellites ayant chacun une orbite polaire circulaire. Mais un tel système, pour maintenir une communication lorsqu'un terminal sort de la couverture d'un premier satellite, comprend des liaisons intersatellites. Une telle solution nécessite donc une démodulation à bord du premier satellite, un aiguillage de l'information, une transmission vers un second satellite et un renvoi vers la station de connexion. Elle est très compliquée et coûteuse.

Cette solution est par exemple décrite dans le document EP-A-0.365.885.

Le but de la présente invention est de minimiser le coût du segment spatial en utilisant des satellites transparents, et en supprimant toute liaison inter-satellites.

Cet objectif est atteint grâce à un procédé conforme à la revendication 1.

Dans une première variante, le basculement du trafic est un basculement d'un premier satellite sur un second ayant une élévation suffisante sur une zone déterminée qui est une cellule satellitaire.

Dans une seconde variante, le basculement du trafic est celui d'un premier à un second faisceau d'un même satellite.

Dans une première réalisation, le basculement du trafic du premier faisceau au second est progressif; l'établissement de toutes les nouvelles communications s'effectuant au travers d'un même satellite; la décision étant prise de basculer le restant du trafic sur ce second faisceau en fonction de la dégradation de la qualité du service assuré dans le premier faisceau et de l'environnement radioélectrique sur un groupe de terminaux.

Dans une seconde réalisation, le basculement du trafic du premier faisceau au second est global; l'ordre de commuter du premier faisceau au second étant envoyé de la station de connexion à l'ensemble des terminaux de la zône correspondante lorsque l'ensemble des paramètres de l'environnement radioélectrique de ces terminaux atteint une certaine limite.

Le procédé de l'invention utilise au moins une constellation de WALKER (1389 km, 47°, 24/08/3) ou WALKER (1389 km, 55°, 24/08/3). Un tel système satellitaire est un système à couverture terrestre mondiale qui complémente les systèmes de communications existants. Il permet d'offrir une grande variété de services. Mais sa principale caractéristique est de pouvoir s'adapter à des situations de trafic et de service différentes de région à région.

L'analyse de marché a, en effet, démontré que les principaux besoins de communications étaient régionaux, puis qu'il existait des niches de marché à caractère mondial. L'architecture d'un tel système est conçue pour s'adapter à cette situation.

Ces utilisations concernent aussi bien les réseaux fermés que les réseaux publics. Le service de base est la téléphonie numérique avec toutes les applications qui peuvent en découler concernant les données. D'autres services peuvent également être fournis, qui utilisent l'effet "Doppler" provenant du défilement des satellites. Ces services sont des services de radio-navigation, ou de radio-localisation. Il est également prévu de pouvoir employer la radio-localisation pour effectuer certaines des fonctions de rattachement à une station de base.

L'invention va être décrite de façon plus détaillée ci-après, à l'aide de la description et des dessins annexés.

Sur ces dessins :
- la figure 1 illustre le procédé de basculement du trafic dans un système de satellites de l'art connu;
- les figures 2 à 6 illustrent le procédé de basculement du trafic selon l'invention.

Le système de satellites ou "constellation" considéré est un système à couverture mondiale qui complémente les systèmes communications terrestres existant. Dans ce système, un terminal mobile ou non, émetteur-récepteur ou récepteur uniquement, est identifié, localisé et relié par un satellite de la constellation au travers d'une station de connexion au réseau fixe public lui permettant d'accéder à l'ensemble des services du réseau public téléphonique ou du RNIS.

Les ressources radioélectriques allouées à l'ensemble des terminaux sont divisées en zones satellitaires qui correspondent chacune à une zone de rayon faible par rapport à la couverture satellite et de rayon grand par rapport à une cellule terrestre d'un réseau cellulaire de terre par exemple de type "Groupe Spécial Mobiles" (GSM). Cette zone est rattachée à une station de connexion et les terminaux appartenant géographiquement à cette zone sont rattachés à cette station.

Le système doit connaître, en temps réel, l'ensemble des terminaux actifs (communication établie ou en cours d'établissement) et des terminaux en "veille"; Hors des temps de communications d'un terminal, celui-ci étant considéré en veille ou inactif. Dans ce système, les terminaux appartiennent donc à une cellule satellitaire rattachée à une station de connexion qui assure la connexion au réseau cellulaire de terre.

Les terminaux reçoivent en mode "veille" un signal sur une fréquence spéciale identifiant la cellule dans laquelle ils se trouvent et leur permettant de connaître les paramètres affectés à cette cellule. Tout nouveau terminal devenant actif dans cette cellule émet son code d'identification. La procédure de mise à jour de la base de données de positionnement des terminaux est identique à celle employée dans l'infrastructure terrestre de radiocommunication mobile.

Par rapport aux réseaux cellulaires, le système par satellites n'impose pas un nombre important d'échanges de données entre les bases de données de positionnement des terminaux et la station de connexion. Cela est dû :
- Au grand rayon de couverture de la cellule satellitaire.
- Au principe que dans le réseau de cellules satellitaires, le passage d'un terminal d'une cellule à l'autre est considéré comme étant très faible.

Pour un terminal, les coordonnées d'accès au réseau sont constituées par la donnée des ressources radioélectriques et d'une bande fréquentielle de canal. Pour la station de connexion, en plus des données propres au terminal, un numéro satellite est attribué afin d'assurer la liaison avec les terminaux se trouvant dans la cellule rattachée à la station de connexion.

Dans une cellule donnée, la localisation et l'enregistrement des terminaux ainsi que le traitement des appels sont identiques à ceux utilisés dans le réseau cellulaire de terre. Au niveau du traitement des appels, une donnée supplémentaire relative au numéro du satellite ayant la meilleure élévation sur la cellule considérée est prise en compte par la station de connexion. En effet, une station parmi les stations de connexion intègre des équipements supplémentaires nécessaires à la localisation des satellites assurant la couverture radioélectrique de cette cellule. Ces mesures transmises au segment sol de contrôle permettent de calculer les éphémérides des satellites et d'en réduire des tabulations de pointage d'antenne des stations de connexion.

Dans une cellule, la connexion d'un terminal au réseau terrestre est donc accomplie au moyen d'une station de connexion. Cette station assure les fonctions suivantes :
- elle gère un lot de ressources radioélectriques préassignées et un lot de ressources en cas de débordement.
- elle prend en charge les procédures d'établissement et de rupture des liaisons avec les terminaux.
- elle écoule le trafic sur le satellite présentant la meilleure élévation. Cela se traduit par la poursuite des satellites et le basculement du trafic d'un satellite à l'autre selon l'élévation présentée par chacun d'entre eux.
- elle assure le raccordement à un auto-commutateur terrestre.

Pour assurer ces fonctions, la station de connexion est composée de deux entités distinctes :
- une unité de radio-communications comprenant les sous-systèmes antennes et radioélectriques (RF), un sous-système de traitement du signal (modems,...),
- une unité de gestion et de raccordement comprenant la sous-gestion de la partie radioélectrique de la station (gestion des attributions des ressources radio-électriques, préparation et exécution des basculements de satellites,...) et le sous-système de gestion des échanges avec le segment terrestre de transmission.

Chaque station de connexion est équipée de trois antennes avec leur sous-système RF associé. Deux antennes de la station sont en poursuite. La troisième antenne sert de secours aux deux autres. Chaque antenne est équipée d'un système de poursuite programmable sur éphémérides. Ces tables de pointage sont fournies à intervalle régulier par le segment de contrôle des satellites du système.

D'un point de vue général et par rapport à un réseau cellulaire de terre, le système n'introduit pas de modifications dans l'architecture globale du réseau terrestre. La spécificité se trouve au niveau de la station de connexion dans le choix du satellite ayant la meilleure élévation sur la zone considérée et dans la gestion du basculement du trafic d'un satellite à l'autre.

Afin de minimiser le coût du segment spatial, les satellites sont transparents et il n'y a pas de liaisons intersatellites.

De ces deux choix, il résulte que pour maintenir une communication on bascule simultanément les liaisons mobile-satellite et satellite-station de connexion d'un satellite sur un autre. Ce mode de fonctionnement entraîne que :
- le principe d'enregistrement de localisation (roaming) est le rattachement d'un terminal à la station de connexion la plus proche,
- il existe une distance limite en-dessous de laquelle le basculement des liaisons satellite-mobile, satellite-station de connexion est possible.

L'estimation de cette distance doit aussi prendre en compte :
- une élévation acceptable afin de garantir une qualité de service suffisante,
- la faisabilité pour le terminal et la station de connexion d'acquérir rapidement la porteuse et la synchronisation du nouveau canal choisi.

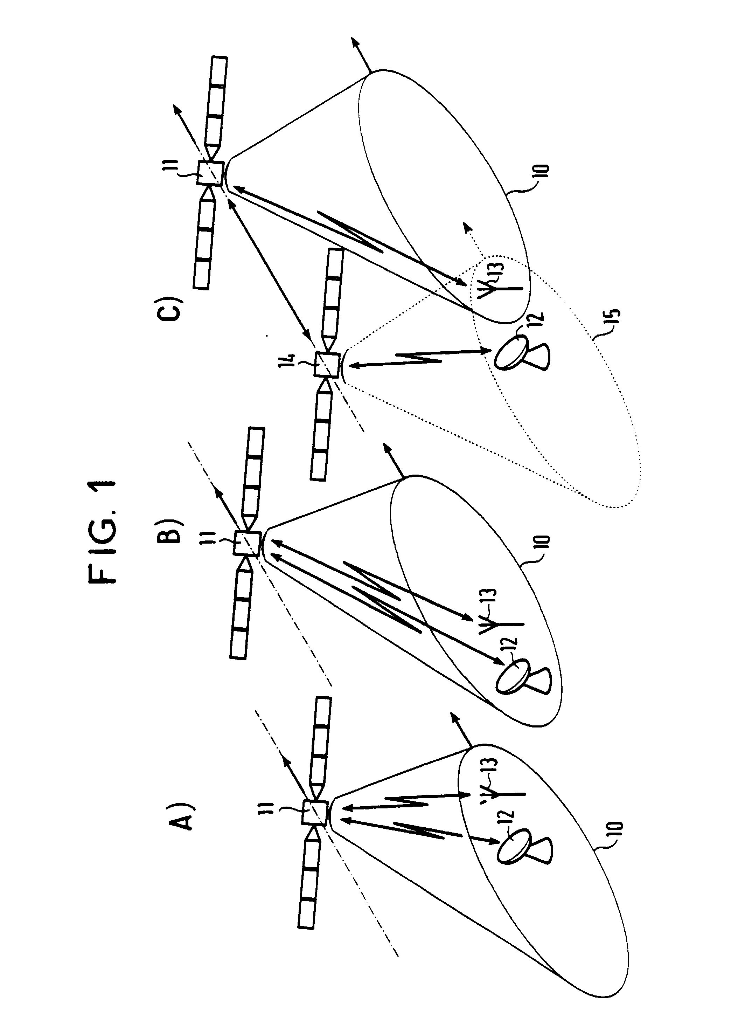

Pour mettre en évidence les avantages d'une telle solution les figures 1, 2 et 3 illustrent respectivement un basculement nécessitant une liaison intersatellite et le basculement selon l'invention qui ne nécessite aucune liaison de ce type.

Sur la figure 1A, la couverture 10 du premier satellite 11 englobe une station de connexion 12 et un terminal 13.

Sur la figure 1B, le satellite 11 s'est déplacé, mais la station de connexion 12 et le terminal 13 restent toujours en visibilité du satellite.

Sur la figure 1C, la couverture 10 du satellite 11 n'englobe plus la station de connexion 12. La liaison terminal 13-station de connexion 12 doit alors passer par un second satellite 14 dont la couverture 15 englobe la station 12.

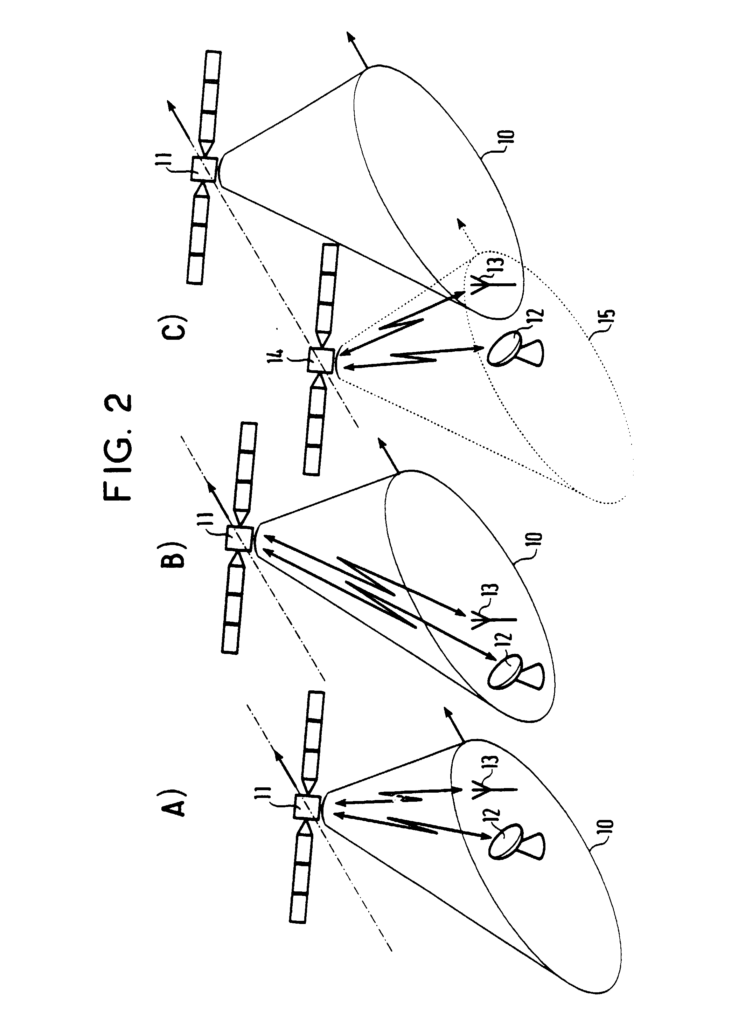

Dans une première variante du procédé de l'invention, on a les mêmes deux premiers cas représentés sur les figures 2A et 2B. Par ccntre sur la figure 2C il y a eu basculement du premier (11) sur le second (14) satellite. La liaison terminal 13 - station de connexion 12 ne passe que par le second satellite 14.

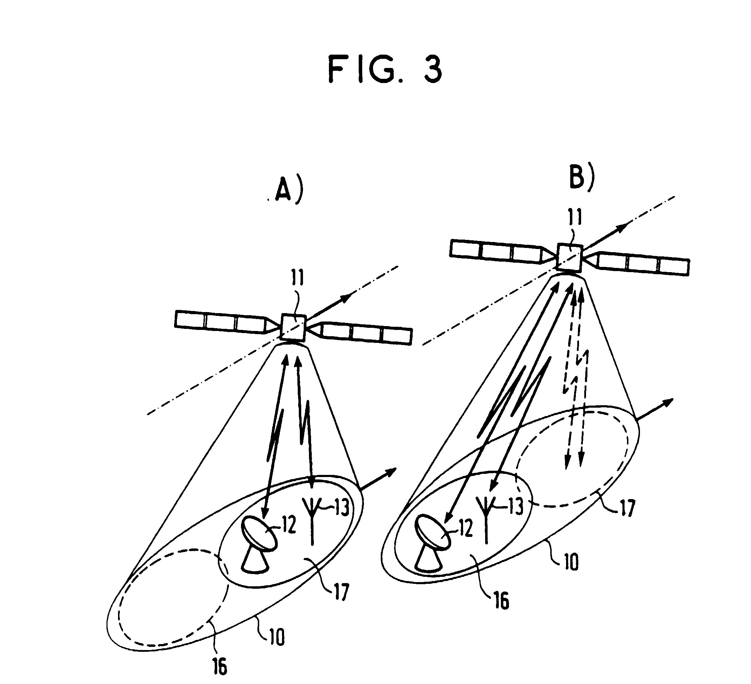

Une seconde variante du procédé de l'invention est représentée sur la figure 3. Sur la figure 3A la couverture du premier faisceau 17 englobe une station de connexion 12 et un terminal 13. Sur la figure 3B la couverture du faisceau 17 n'englobe plus la station de connexion 12 et le terminal 13. La liaison terminal 13 - station de connexion 12 doit alors passer par le faisceau 16 du même satellite 11 dont la couverture englobe ladite station et ledit terminal.

La faisabilité du basculement repose sur le respect d'un ensemble de contraintes quant à l'établissement d'une liaison avec un nouveau satellite ou avec un nouveau faisceau. Les valeurs du retard de synchronisation, du décalage, de fréquence porteuse doivent être maintenues dans les limites des performances des unités de traitement du signal. Les positions relatives de la station de connexion et des satellites en visibilité sont connues par les éphémérides avec une précision suffisante. Seule la position relative du terminal par rapport à la station de connexion est inconnue et c'est donc elle qui introduit un aléa sur l'élévation, la synchronisation, la fréquence de la porteuse reçue.

Dans la suite de la description on considérera à titre d'exemple la première variante.

Si l'on prend l'exemple du décalage Doppler, une natation de connexion connaît exactement à un instant donné le décalage Doppler du satellite entrant et celui du satellite sortant. Cette station peut communiquer au terminal le Doppler qu'elle observe à l'instant de basculement et que le terminal observe aussi à une petite incertitude près. Dans ce cas, le terminal est capable de précorriger sa fréquence de réception et d'émission lors du basculement. L'incertitude du décalage Doppler à compenser est alors réduite à celle résultant de l'incertitude de la position du terminal.

Pour un terminal appartenant à une cellule donnée rattachée à une station sol, les ressources radioélectriques qui lui sont allouées se composent d'un numéro d'intervalle émission/réception (combinaison d'un accès AMRT (TDMA) ou AMRC et d'un "beam hopping" ou "saut de pinceaux," dans lequel N spots de couverture au sol sont éclairés successivement et séquentiellement en formant des groupes de P spots choisis parmi les N spots) et d'une bande de canal de fréquence.

Un basculement satellite correspond au passage d'un état donné (attribution de ressources radioélectriques, station de connexion, numéro de satellite) à un nouvel état. Un tel basculement peut arriver par :
- une meilleure élévation du satellite apparaissant sur la cellule fixe,
- un rattachement du terminal à une autre station de connexion (passage du terminal d'une cellule considérée à une autre),
- un environnement radioélectrique d'un faisceau satellite plus favorable.

La décision d'effectuer un basculement satellite est liée à l'apparition d'un satellite à meilleure élévation sur la zone géographique où se trouvent les terminaux et la station de connexion.

La commutation est effectuée à partir des éphémérides satellite et de la connaissance de l'environnement radioélectrique du mobile. Elle doit être la plus courte possible afin de ne pas affecter les communications établies.

Lorsque le basculement satellite est effectué, une série d'informations de synchronisation est envoyée pour rétablir une communication nominale. La procédure de synchronisation est identique à celle utilisée dans le réseau cellulaire terrestre.

Dans le cas d'échec de la resynchronisation le terminal reprend automatiquement, les ressources radioélectriques qui lui étaient affectées avant le basculement satellite et l'opération est renouvellée.

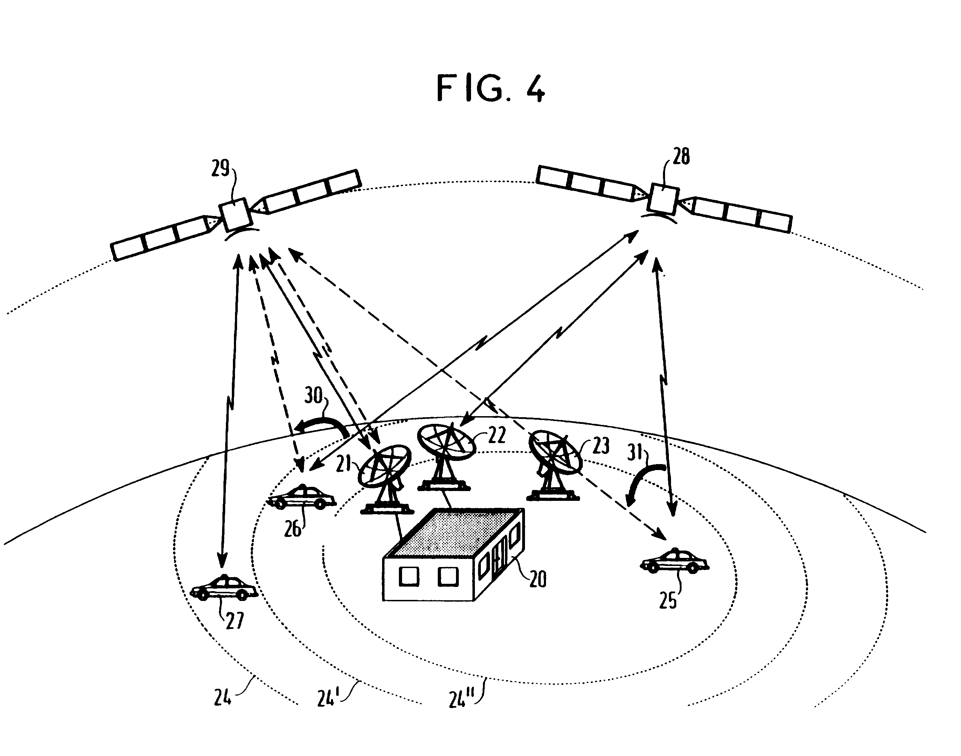

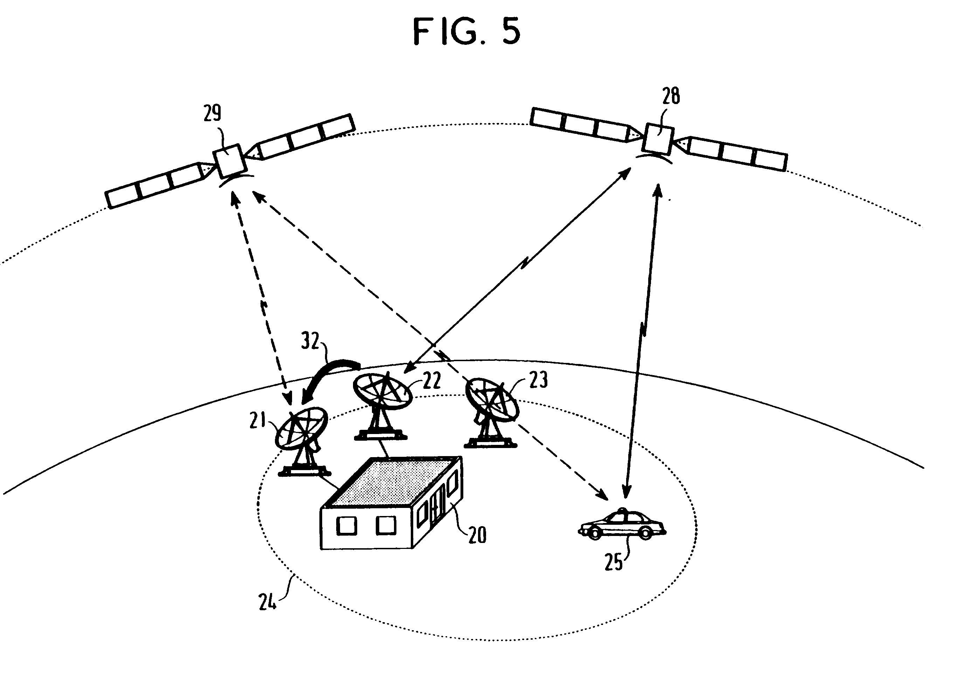

Deux scénarios d'exécution sont envisageables : un basculement progressif ou un basculement global du trafic.
- Lorsqu'un basculement progressif du trafic d'un satellite à l'autre est employé, quand un satellite a une élévation suffisante sur une cellule satellitaire, l'établissement de toutes nouvelles communications s'effectue au travers de ce nouveau satellite. Ensuite, en fonction de la dégradation de la qualité de service assurée par le premier satellite et de l'environnement radioélectrique sur un groupe de terminaux mobiles, la décision est prise de basculer ce trafic sur le nouveau satellite. Cette procédure favorise un transfert progressif du trafic d'un satellite à l'autre. On doit surveiller en permanence l'environnement radioélectrique des terminaux (balise de surveillance à prévoir ou échange direct avec les terminaux qui effectuent alors des séries de mesure) ainsi que la qualité de service assuré . Ainsi, comme représenté sur la figure 4, on a une station de connexion 20 équipée de trois antennes 21, 22, et 23, et une cellule satellitaire associée 24. Deux terminaux 25 et 26 sont en liaison avec cette station 20 via un premier satellite 28. La qualité de service assurée par le satellite 28 se dégradant, la cellule 24 devient 24' puis 24". La liaison du nouveau terminal appelant 27 avec la station 20 est établie directement au travers du second satellite 29. Les décisions de basculer les terminaux 25 et 26 du premier (28) vers le second (29) satellite, telles que définies plus haut, sont prises ultérieurement (flèches 30 et 31).
- Lorsqu'un basculement de l'ensemble du trafic d'un satellite à l'autre est utilisé, quand le nouveau satellite a un angle d'élévation favorable vue de la cellule satellitaire fixe, et quand l'ensemble des paramètres de l'environnement radioélectrique des mobiles atteint une certaine limite, l'ordre de commuter d'un satellite à l'autre est envoyé de la station de connexion à l'ensemble des terminaux comme représenté sur la figure 5 (flèche 32). La procédure est globale et affecte l'ensemble des terminaux se trouvant dans une zone donnée. Cependant, l'ensemble des terminaux doit se synchroniser avant de poursuivre la transmission de leurs informations et les allocations de ressources radioélectriques concernant l'ensemble des terminaux doivent être prises en compte instantanément au moment de la commutation.

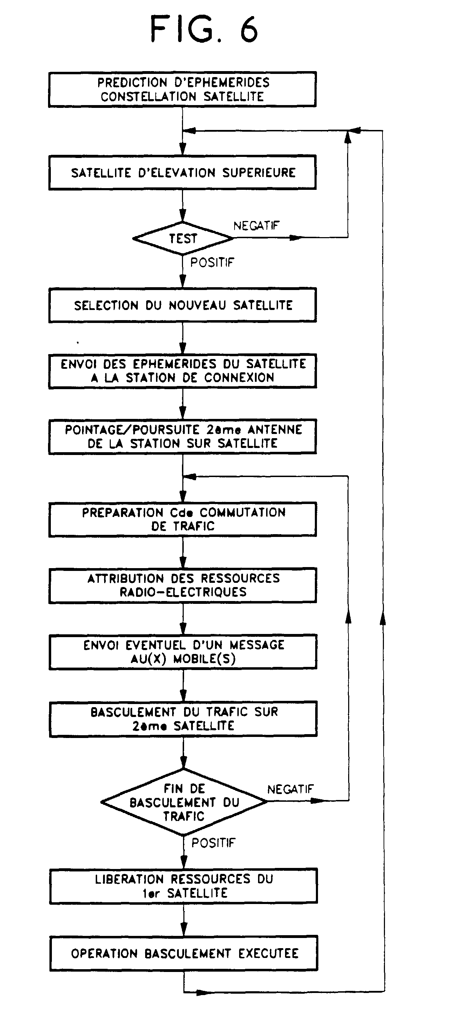

La figure 6 décrit la préparation et l'exécution d'un basculement.

A partir des prédictions d'éphémérides de la constellation des satellites et sur une zone terrestre donnée, le satellite ayant la meilleure élévation sur cette zone est sélectionné. Cette sélection permet à la station de connexion d'acquérir et de poursuivre le nouveau satellite et de préparer les attributions de ressources radioélectriques.

L'ordre d'exécution du basculement satellite est décidé par la station de connexion et piloté par le sous-système de contrôle des liaisons. L'exécution du basculement satellite entraîne la réalisation conjointe et parfaitement synchronisée entre la station de connexion et les terminaux des actions suivantes :
- pour le mobile, un changement d'instant d'émission et de réception. Cela se traduit par une translation dans le temps de la configuration initiale,
- pour la station de connexion, un basculement du trafic sur une autre antenne, cette dernière pointant vers le nouveau satellite.

Le basculement satellite utilise la panoplie des procédures du GSM sans création d'une procédure nouvelle. Dans le cas du système considéré, cette procédure est gouvernée par la station de connexion.

Un système particulièrement avantageux mettant en oeuvre le procédé décrit ci-avant comprend au moins une constellation de satellites qui appartient au groupe des constellations connues et répertoriées sous le nom de **"constellations symétriques de Walker"**. (Voir à ce sujet l'article de J.G. Walker intitulé "Continuous whole earth coverage by circular-orbit satellites" paru dans "Satellite systems per mobile communications and surveillance"; IEEE conference publication 95; 1973). Ces constellations sont symétriques tant par la répartition régulière des satellites sur une même orbite que par la distribution des satellites sur une même orbite que par la distribution et l'égale inclinaison des plans orbitaux dans l'espace. Elles ont été choisies parce qu'elles permettent de minimiser le nombre de satellites pour une couverture donnée, et qu'elles sont particulièrement efficaces pour couvrir une bande de latitude.

Une constellation de WALKER est caractérisée par cinq paramètres :
- L'altitude, ici 1389 km (pour des raisons de durée de vie).
- L'inclinaison.
- Le triplet de paramètres T/P/F :
   . T est le nombre total de satellites,
   . P est le nombre de plans orbitaux,
   . F est le paramètre de phasage qui indique la position relative des satellites d'un plan orbital au suivant.

Pour optimiser la couverture des zones habitées, c'est-à-dire comprises entre l'équateur et 65° de latitude (Nord ou Sud), il faut une constellation de **Walker (1389 km, 52°, 48/8/1)**. Cette constellation a l'avantage de permettre une couverture optimale de la zone, notamment du point de vue de l'élévation, mais elle a l'inconvénient, comme toutes les constellations à nombre important de satellites de demander au moins deux ans à mettre en place. Le système considéré utilise donc deux constellations, qui peuvent être mises en place consécutivement.

Les constellations retenues sont les suivantes :
**WALKER (1389 km, 47°, 24/08/3)**, qui couvre correctement le CONUS et le Sud de l'Europe (typiquement jusqu'à la latitude de Lille), mais qui présente des trous importants de couverture en-dessous de 30° de latitude.
**WALKER (1389 km, 55°, 24/08/3)**, qui couvre le reste du monde et permet d'optimiser la couverture, notamment l'élévation, dans les pays de latitude comprise entre 10° et 60°.

On peut noter que la première constellation à 24 satellites comporte des zones dans lesquelles l'élévation minimale est inférieure à celle demandée. Ces zones sont mobiles et en fait, à faible latitude. Le temps pendant lequel aucun satellite n'est visible à un point donné, est relativement faible. Pour les zones à latitude plus élevée, l'élévation moyenne est nettement plus élevée et la couverture ne présente plus de trous. Ces défauts sont corrigés par le lancement de la deuxième constellation.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention. Les explications données ci-dessus concernant la première variante du procédé de l'invention sont, bien entendu, valables pour la seconde variante : le basculement du premier faisceau au second peut, ainsi, être progressif ou global.

## Revendications

1. Procédé de basculement du trafic dans un système de communications par satellites en orbite basse à destination de terminaux, la connexion d'un terminal (13) à un réseau terrestre de communications étant accomplie au moyen d'une station de connexion (12) par l'intermédiaire dun premier satellite (11), caractérisé en ce que le basculement des liaisons satellite (11) -terminal (13) et satellite (11) -station de connexion (12) sur un deuxième satellite (14) ou d'un premier faisceau d'antenne sur un deuxième faisceau d'antenne (16) du même satellite (11) n'est possible qu'à l'intérieur de la zone de rattachement à la station de connexion, et en ce que la décision de basculer le trafic est prise par ladite station de connexion (12) en fonction de la dégradation de la qualité de service et de l'environnement radioélectrique sur un groupe de terminaux de ladite zône.

2. Procédé selon la revendication 1, caractérisé en ce que le basculement du trafic est un basculement du premier satellite (11) sur le second (14) ayant une élévation suffisante sur une zône déterminée qui est une cellule satellitaire.

3. Procédé selon la revendication 1, caractérisé en ce que le basculement du trafic du premier satellite (11) au second (14) est progressif; l'établissement de toutes les nouvelles communications s'effectuant au travers du second satellite; la décision étant prise de basculer le restant du trafic sur ce second satellite en fonction de la dégradation de la qualité du service assuré par le premier satellite et de l'environnement radioélectrique sur un groupe de terminaux.

4. Procédé selon la revendication 1, caractérisé en ce que le basculement du trafic du premier satellite (11) au second (14) est global; l'ordre de commuter du premier satellite au second étant envoyé de la station de connexion à l'ensemble des terminaux de la zone correspondante lorsque l'ensemble des paramètres de l'environnement radioélectrique de ces terminaux atteint une certaine limite.

5. Procédé selon la revendication 1, caractérisé en ce que le basculement du trafic est celui du premier (17) sur le second (16) faisceau d'un même satellite.

6. Procédé selon la revendication 5, caractérisé en ce que le basculement du trafic du premier faisceau (17) au second (16) est progressif; l'établissement de toutes les nouvelles communications s'effectuant au travers d'un même satellite; la décision étant prise de basculer le restant du trafic sur ce second faisceau en fonction de la dégradation de la qualité du service assuré dans le premier faisceau et de l'environnement radioélectrique sur un groupe de terminaux.

7. Procédé selon la revendication 5, caractérisé en ce que le basculement du trafic du premier faisceau (17) au second (16) est global; l'ordre de commuter du premier faisceau au second étant envoyé de la station de connexion à l'ensemble des terminaux de la zône correspondante lorsque l'ensemble des paramètres de l'environnement radioélectrique de ces terminaux atteint une certaine limite.

8. Procédé selon l'une quelconque des revendications précédentes, caractérisé en ce qu'il est appliqué à au moins une constellation de satellites de type Walker.

## Patentansprüche

1. Verfahren zum Weiterschalten des Verkehrs für Endgeräte in einem Nachrichtensystem über Satelliten mit niedriger Umlaufbahn, wobei der Anschluß eines Endgeräts (13) an ein erdgebundenes Nachrichtennetz über eine Anschlußstation (12) und einen ersten Satelliten (11) erfolgt, dadurch gekennzeichnet, daß die Weiterschaltung der Verbindungen von einem Satelliten (11) zum Endgerät (13) und vom Satelliten (11) zur Anschlußstation (12) auf einen zweiten Satelliten (14( oder von einem ersten Antennenstrahl auf einen zweiten Antennenstrahl (16) desselben Satelliten (11) nur innerhalb der der Anschlußstation zugewiesenen Zone möglich ist und daß die Entscheidung zur Weiterschaltung des Verkehrs von der Anschlußstation (12) abhängig von der Verschlechterung der Dienstqualität und von den funkelektrischen Gegebenheiten in einer Gruppe von Endgeräten dieser Zone getroffen wird.

2. Verfahren nach Anspruch 1, dadurch gekennzeichnet, daß die Weiterschaltung des Verkehrs eine Weiterschaltung vom ersten Satelliten (11) auf den zweiten mit einem ausreichenden Elevationswinkel bezüglich einer eine Satellitenzelle bildenden bestimmten Zone ist.

3. Verfahren nach Anspruch 1, dadurch gekennzeichnet, daß die Weiterschaltung des Verkehrs vom ersten Satelliten (11) auf den zweiten (14) progressiv ist, wobei der Aufbau aller neuen Nachrichtenverbindungen über den zweiten Satelliten erfolgt und die Entscheidung über die Weiterschaltung des übrigen Verkehrs auf den zweiten Satelliten abhängig von der Verschlechterung der Qualität des durch den ersten Satelliten gewährleisteten Dienstes und von den funkelektrischen Gegebenheiten in einer Gruppe von Endgeräten getroffen wird.

4. Verfahren nach Anspruch 1, dadurch gekennzeichnet, daß die Weiterschaltung des Verkehrs vom ersten Satelliten (11) auf den zweiten (14) global ist, wobei der Befehl zur Weiterschaltung vom ersten auf den zweiten Satelliten von der Anschlußstation an alle Endgeräte der entsprechenden Zone gesendet wird, wenn die Gesamtheit der Parameter der funkelektrischen Gegebenheiten dieser Endgeräte einen gewissen Grenzwert erreicht.

5. Verfahren nach Anspruch 1, dadurch gekennzeichnet, daß die Verkehrsweiterschaltung eine Weiterschaltung vom ersten Strahl (17) auf den zweiten Strahl (16) eines gleichen Satelliten bildet.

6. Verfahren nach Anspruch 5, dadurch gekennzeichnet, daß die Weiterschaltung vom ersten Strahl (17) auf den zweiten Strahl (16) progressiv ist, wobei der Aufbau aller neuen Nachrichtenverbindungen über einen gleichen Satelliten erfolgt und die Entscheidung zur Weiterschaltung für den verbleibenden Verkehr auf den zweiten Strahl abhängig von der Verschlechterung der Qualität des gewährleisteten Dienstes im ersten Strahl und von den funkelektrischen Gegebenheiten einer Gruppe von Endgeräten getroffen wird.

7. Verfahren nach Anspruch 5, dadurch gekennzeichnet, daß die Weiterschaltung vom ersten Strahl (17) auf den zweiten Strahl (16) global ist, wobei der Befehl zur Weiterschaltung vom ersten Strahl zum zweiten von der Anschlußstation an alle Endgeräte der entsprechenden Zone gesendet wird, wenn die Gruppe von Parametern der funkelektrischen Gegebenheiten dieser Endgeräte einen gewissen Grenzwert erreicht.

8. Verfahren nach einem beliebigen der vorhergehenden Ansprüche, dadurch gekennzeichnet, daß es auf mindestens eine Satellitenkonstellation vom Walker-Typ angewendet wird.

## Claims

1. Method of handing off traffic in a low orbit satellite communication system serving terminals, a terminal (13) being connected to a terrestrial communication network by means of a connection station (12) using a first satellite (11), characterised in that handing off of the satellite (11)-terminal (13) and satellite (11)-connection station (12) links to a second satellite (14) or from a first antenna beam to a second antenna beam (16) of the same satellite (11) is possible only within the attachment area of the connection station and in that the decision to hand off the traffic is made by said connection station (12) based on deterioration of the quality of service and of the radio environment for a group of terminals of said area.

2. Method according to claim 1 characterised in that the traffic is handed off from the first satellite (11) to the second satellite (14) having sufficient elevation over a particular area which is a satellite cell.

3. Method according to claim 1 characterised in that the traffic is handed off from the first satellite (11) to the second satellite (14) progressively, all new calls are set up via the second satellite and the decision to hand the remaining traffic off to the second satellite is based on deterioration of the quality of service provided by the first satellite and the radio environment for a group of terminals.

4. Method according to claim 1 characterised in that the traffic is handed off from the first satellite (11) to the second satellite (14) globally and the instruction to hand off from the first satellite to the second satellite is sent from the connection station to all the terminals of the respective area when all the parameters of the radio environment of said terminals reach a particular limit.

5. Method according to claim 1 characterised in that the traffic is handed off from the first beam (17) to the second beam (16) of the same satellite.

6. Method according to claim 5 characterised in that the traffic is handed off from the first beam (17) to the second beam (16) progressively, all new calls are set up via the same satellite and the decision to hand the remainder of the traffic off to the second beam is based on deterioration of the quality of service provided in the first beam and the radio environment of a group of terminals.

7. Method according to claim 5 characterised in that the traffic is handed off from the first beam (17) to the second beam (16) globally and the instruction to hand off from the first beam to the second beam is sent from the connection station to all the terminals of the respective area when all parameters of the radio environment of said terminals reach a particular limit.

8. Method according to any one of the preceding claims characterised in that it is applied to at least one Walker type satellite constellation.
